Europäisches Patentamt

European Patent Office

Office européen des brevets

(11) Publication number: **0 286 736 B1**

# EUROPEAN PATENT SPECIFICATION

(45) Date of publication of patent specification: **08.07.92**   (51) Int. Cl.⁵: **A01D  41/14**, A01D 75/28

(21) Application number: **87200725.7**

(22) Date of filing: **16.04.87**

(54) **Header flotation system for an agricultural machine.**

(43) Date of publication of application:
**19.10.88 Bulletin  88/42**

(45) Publication of the grant of the patent:
**08.07.92 Bulletin  92/28**

(84) Designated Contracting States:
**DE FR GB**

(56) References cited:
DE-A- 2 208 243         GB-A- 1 145 023
US-A- 2 753 675         US-A- 2 821 059
US-A- 3 386 235         US-A- 3 731 470
US-A- 4 527 381

(73) Proprietor: **FORD NEW HOLLAND N.V.**
**Leon Claeysstraat 3a**
**B-8210 Zedelgem(BE)**

(72) Inventor: **Ossselaere, Guy Henri Julien**
**Dorp 10**
**B-8021 Zedelgem(BE)**

(74) Representative: **Vandenbroucke, Alberic T.J.**
**FORD NEW HOLLAND N.V. Leon Claeysstraat**
**3A**
**B-8210 Zedelgem(BE)**

Rank Xerox (UK) Business Services

## Description

This application is a continuation of EP-A-0,243,540 and relates to a flotation system for a header of an agricultural machine and, although the present invention will be discussed primarily in relation to combine harvesters, it is to be understood that it is applicable to any other type of agricultural machine which employs a header, such as a forage harvester, for example.

Combine harvesters, particularly the self-propelled type, are equipped to utilise a variety of crop-gathering headers, including headers specifically designed for harvesting corn, cereal grains or soy beans, for example. Normally, these headers are attached to the forward end of a feeder housing which is a structure used to convey crop material from the header to a base unit of the combine harvester for further harvesting treatment. As is shown in US Reissue Patent 26,512, the forward end of the feeder housing can be constructed so that the header can be quickly and easily attached thereto. Usually, the feeder housing structure is rectangular in cross section and includes a rectangular crop inlet opening at the forward end which matches with a crop outlet opening of a header attached to the feeder housing.

With the modern trend of developing headers of increasingly larger sizes, providing a ready capability for the headers to follow the contours of the ground is vital. One type of prior art levelling or flotation mechanism, such as disclosed in US-A-3,981,125, involves the twisting of the feeder housing structure about the generally fore-and-aft extending centre line thereof to effect an associated lateral floating movement of the header. Also hillside combine harvesters have been developed to allow the header to follow slopes of up to 45%. Such hillside combine harvesters have been known to utilise a side pivot mechanism, as disclosed in US-A-3,731,470, or a centre-mounted pivot connection directly between the header and the feeder housing as disclosed in US-A-2,780,903; the latter arrangement involving a specific circular or semi-circular opening between the feeder housing and the header.

In other known header flotation systems use is made of one or two hydraulic actuators connected between the header and the base unit of a machine to pivot the header in a transverse direction around a generally fore-and-aft pivot axis and which are interconnected hydraulically with a header weight compensation device including control actuators together with a hydro-pneumatic accumulator which effect raising and lowering of the header. In operation, the hydraulic system, inclusive the hydro-pneumatic accumulator is pressurized at an operating pressure such that the ground contact pressure of the header is minimal. This allows the header to follow the irregularities in the ground contour by as well raising or lowering the complete header as by pivoting the header in the transverse direction depending on the size of the irregularities and on the location thereof relative to the header. With headers having a weight imbalance, such as grain headers having the drive means located at one side, a single flotation actuator can be used at the side of the drive means, but with balanced headers, two flotation actuators are used, one at or towards each side of the header.

In still another known header flotation system such as disclosed in US-A-3,386,235, the header is formed in two parts which can pivot independently from each other and relative to the feeder housing around respective fore-and-aft extending pivot axes. These parts also can be raised or lowered in unison together with the feeder housing upon which they are mounted, around a transverse pivot axis. A hydraulic suspension system, including cylinders supporting the feeder housing with the header thereon on the base unit and further cylinders supporting the header portions on the feeder housing, is coupled to a hydraulic control mechanism which is actuated by variations in hydraulic pressure in the respective cylinders in response to corresponding movements of the header, respectively the constituent portions thereof over undulations in the ground. The arrangement is such that said variations in pressure transmitted to the control mechanism cause the control mechanism to allow hydraulic pressure fluid to flow to or from the respective cylinders so as to compensate for said variations and tend to maintain a substantially constant hydraulic pressure in the respective cylinders. Hydro-pneumatic accumulators, operating at the system pressure, are coupled to the various cylinders for assisting in a smooth following of the ground irregularities by the header and the constituent portions thereof.

With the latter two systems, the header must always be in contact with the ground at least at some point along its length so that these headers cannot be set to operate at a given stubble height, for example, which is a disadvantage. This is not so with an automatic header height and lateral flotation control system such as disclosed in EP-A-0,198,544 and which uses sensors on the underside of the header. Such sensors produce electrical signals for controlling the flotation actuators via electro-hydraulic valves, thus making the system automatic. However, other disadvantages arise with such automatic systems, the main one of which is that they are slow acting. Furthermore, these systems are expensive and the sensors thereof can suffer damage when the header encounters a large obstruction and the header tilting is too slow to clear this obstruction smoothly. The slow-acting nature of such automatic systems also can place excessive torsional forces on the header and front end of the machine to which it is fitted (for example the feeder housing of a combine harvester) when the header tilts on meeting an irregularity in the ground and until the system has responded and effected the required flotation to compensate. Although an automatic system can operate with the header off the ground because it is not part of a header weight compensation system, it cannot be set to give any desired initial position of the header which deviates from the nominal position of the header because the electro-hydraulic control valves for the flotation actuators can only be set through the sensors.

EP-A-0,243,540 of which the present application is a continuation, proposes a lateral combine header flotation system for pivoting the header about a generally fore-and-aft extending axis and which includes a single hydraulic actuator extending between the header and the base unit (i.e. the feeder housing of the base unit) and which is operable to position the header in a nominal position intermediate opposite extreme positions prior to starting flotation operation. This flotation system further also comprises an energy storage means in the form of a hydro-pneumatic accumulator coupled to the flotation actuator and which is pressurized at a pressure greater than the working pressure which is present in the actuator when the header is in its nominal position and meets no obstruction whereby this energy storage means becomes operative upon pivotal movement of the header in one direction and becomes inoperative upon pivotal movement of the header in the opposite direction when the header meets an obstruction causing the one or the other of said pivotal movements. The arrangement is such that, when the header pivots in said one direction, the actuator retracts so that the energy storage means stores the energy created by the flow of hydraulic fluid out of the actuator and then releases that energy to restore the header to its nominal position when the header is free to move, i.e. when the header has cleared the obstruction causing said pivotal movement. When the header pivots in said other direction, the energy storage means remains inoperative and, as such, allows the header so to pivot and return to its nominal position by making use of external return forces only.

The hydraulic system according to EP-A-0,243,540 basically is a one-way system to the extent that the energy storage means is operative in one direction only. Also, energization of the flotation actuator pivots the header in one direction only and use has to be made of an external return force in the form of either a header imbalance, a spring force or a hydraulic coupling to the header suspension system to pivot the header in the opposite direction.

The present invention makes use of the same basic principles utilized in the invention described in EP-A-0,243,540 but makes the lateral header flotation system more universally applicable.

According to the present invention, a harvester is provided which comprises a mobile base unit, a transversely extending crop harvesting header mounted on the base unit for pivotal movement between opposed extreme positions about a generally fore-and-aft axis and, a lateral flotation system for, during operation of the harvester, permitting the header to pivot about said axis away from a nominal position intermediate said extreme positions for accommodating transversely offset obstacles encountered by the header; said flotation system including hydraulic actuator means of the two-way type and extending between the header and the base unit for pivoting said header in opposite directions, a pressure source coupled to the hydraulic actuator means by a pair of pressure fluid supply lines and, hydro-pneumatic energy storage means comprising a pair of hydro-pneumatic accumulators of which each one is coupled to a corresponding pressure fluid supply line and is pressurized at a pressure greater than the working pressure of the hydraulic actuator means; the arrangement being such that, when the header is positioned at said nominal position and meets an offset obstruction:

- said header is permitted to temporarily pivot in the one or other direction away from this nominal position for moving over said obstruction,
- this pivotal movement results in the gas in one hydro-pneumatic accumulator being temporarily compressed by the flow of pressure fluid out of the actuator means to store energy,
- this pressure fluid subsequently is released back to the actuator means to restore the header to its nominal position upon the header clearing the obstruction and,
- the gas volume in the other hydro-pneumatic accumulator remains unchanged during this pivotal movement away from, and back to said nominal position whereby said other hydro-pneumatic accumulator, under this condition, remains inoperative.

A self-propelled combine harvester incorporating the present invention will now be described in greater detail, by way of example, with reference to the accompanying drawings, in which:

Figure 1 is a front elevational view of the self-propelled combine harvester having a grain header attached thereto, with certain components broken away,

Figure 2 is a cross-sectional view of the forward portion of the combine harvester including the header and feeder housing, taken along the line II-II of Figure 1,

Figure 3 is a side elevational view, to a larger scale, of the forward portion of the feeder housing,

Figure 4 is a hydraulic circuit diagram of the header flotation system in accordance with the invention, and

Figures 5 and 6 are views similar to Figure 4 but showing alternative arrangements.

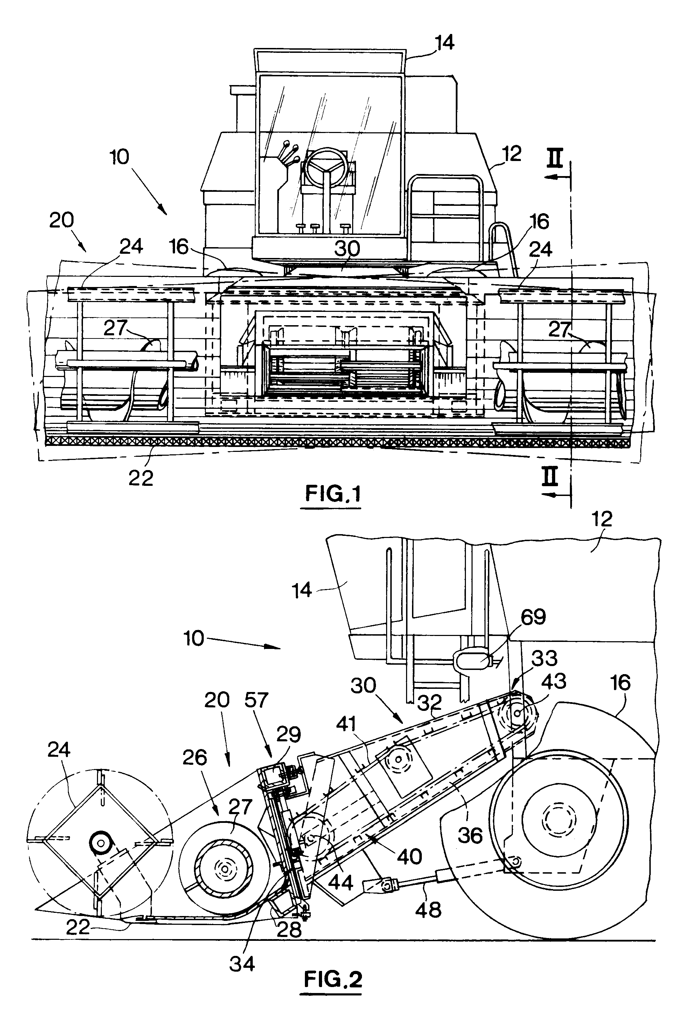

Referring to Figures 1 to 3 of the drawings, left hand and right-hand references are used as a matter of convenience and are determined by standing at the rear of the machine and facing the forward direction of travel. The combine harvester is generally indicated at 10 and comprises a base unit 12, including crop-treating means (not shown) for separating the desired crop material from the waste crop material, a detachable crop-gathering header 20 located forwardly of the base unit 12, a cab 14 elevated above the header 20 for full view of the crop harvesting process, wheels 16, and a feeder housing 30 for conveying cut crop material from the header 20 rearwardly to the base unit 12 for treatment by the crop-treating means which, for example, can be a conventional threshing unit or the more recently developed rotary type axial flow threshing unit.

Referring now to the cross-sectional view of Figure 2, a more detailed view of the general inner workings of the header 20 and the feeder housing 30 can be seen. The header 20 includes a cutterbar 22 operable to sever crop material from the stubble. A reel 24 is disposed above and forwardly of the cutter bar 22 to sweep crop material over the latter and transport it rearwardly to crop consolidating means 26 in the form of a consolidating auger 27. The consolidating auger 27 converges crop material towards a centrally disposed crop discharge opening for discharge to the feeder housing structure 30. A frame 28 of the header 20 includes a transversely disposed main header beam 29 used to support the header 20 from the feeder housing 30.

As can also be seen in Figure 2, the feeder housing 30 has a forwardly extending, elongated body portion 32 defined by a rearward end 33 pivotally attached to the base unit 12 and a forward end 34 adjacent the header 20 for connection thereto. The body portion 32 includes a passageway 36 therethrough, terminating in a crop inlet opening at the forward end 34, for allowing crop material to be transported rearwardly from the forward end 34 to the rearward end 33. A crop conveying means 40 in the form of an endless chain and slat apron conveyor 41 is positioned within the passageway 36 and is operable to transport the crop material rearwardly. The apron conveyor 41 is driven by a drive shaft 43 positioned at the rearward end 33 and is supported on a driven shaft 44 adjacent the forward end 34. The height of the header 20 relative to the ground is controlled by a header lift means in the form of a pair of hydraulic actuators 48 interconnecting the feeder housing 30 and the base unit 12. By extending the actuators 48 the rearward end 33 of the feeder housing 30 is pivoted about the drive shaft 43 whereby the header 20 is lifted from the ground without significantly changing the discharge point of the apron conveyor 41 relative to the base unit 12. These hydraulic actuators 48 may be part either of an automatic header height control mechanism of any type known in the art or of a header weight compensation mechanism equally known in the art.

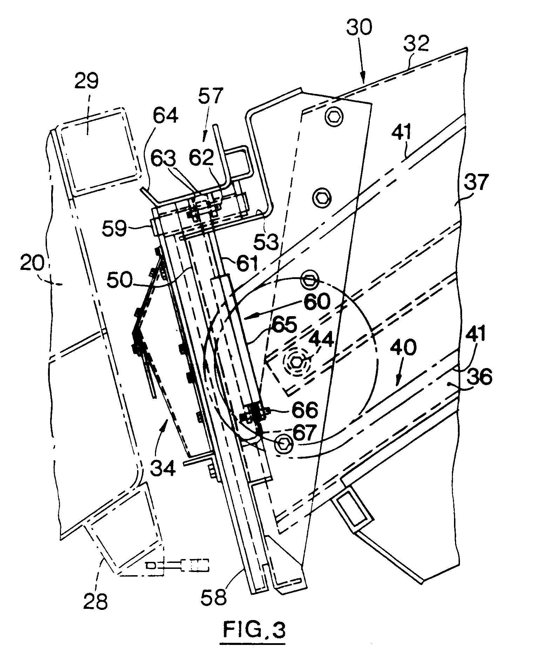

Referring now to Figure 3, an enlarged view of the forward end 34 of the feeder housing 30 showing a front face member 50 and a detached header 20 in phantom proximate thereto, can be seen. The front face member 50 includes an offset section 53 substantially registrable with the main header beam 29 for detachably supporting the header 20 in an operable position on a cradle 58 still to be described hereafter.

A lateral flotation system 57 for the header is best seen in Figure 3 and comprises the cradle 58 already mentioned and which is pivotally attached to the front face member 50 at the forward end 34 of the feeder housing 30 by a pivot pin 59. The cradle 58 comprises a nesting portion 64 for the main header beam 29 at a position generally within the offset section 53 of the front member 50. The components so far described are similar to those of the combine harvester illustrated in US-A-4,253,295 to which reference is made and which discloses further details of construction which are not relevant to the present invention.

In accordance with the present invention, the flotation mechanism 57 further comprises a hydraulic actuator 60 which is of the double acting type and the rod 61 of which is pivotally attached to the cradle 58 by a pin 62 extending between a pair of lugs 63 depending from the nesting portion 64 of the cradle 58 which releasably receives the main header beam 29. The cylinder 65 of the actuator 60 is pivotally attached by a pin 66 to a bracket 67 fixed to, and extending rearwardly from the front face member 50 of the feeder housing 30 at the forward end 34 thereof and against which the lower portion of the cradle 58 is movably supported. The header 20 is firmly coupled to the cradle 58 for being transversely pivotable therewith after the main beam 29 of the header 20 is positioned in the nesting portion 64 of the cradle 58. The double acting actuator 60 is thus effectively connected between the main body 12 of the machine and the header 20 and, hence, is operable to pivot the header 20 in the one or other direction around the pivot 59 for positioning said header in a nominal position intermediate opposed extreme positions prior to starting flotation operation. To this end, the flotation actuator 60 is coupled via a pair of pressure fluid supply lines 75 and the valve 72 to the pressure source 73. One pressure fluid supply line 75 is coupled to the plunger side and the other pressure fluid supply line 75 is coupled to the plunger rod side of the actuator 60. The valve 72 is a conventional three-position, four-way electromagnetic valve which further also is coupled to the reservoir 74. In accordance with the present invention, a hydro-pneumatic accumulator 69 is coupled to each one of the pressure fluid supply lines 75. Both accumulators 69 are pressurized at pressures greater than the working pressures of the actuator 60 required to pivot the header in the one or other direction. Preferably these differences between the working pressures in the actuator 60 and the gas pressures in the accumulators 69 are at least 10 bar. To the extent that the working pressures in the actuator 60 at the plunger and plunger rod sides may be different, the gas pressures in the accumulators 69 equally may be different, although, for practical reasons, these gas pressures may be set at the same value; the only requirement being that these gas pressures exceed the working pressures with an amount which is sufficient to overcome friction forces in the pivotal mounting of the header as well as eventual header imbalances. From what precedes it thus will be appreciated that, when the header is in the nominal position and meets no obstruction, the gas in the respective hydro-pneumatic accumulators 69 occupies the entire volume thereof. Further, it also will be clear that, by utilizing the valve 72, the header 20 is selectively positionable, in any one nominal position from a range of positions inbetween two extreme positions without changing the gas pressure in the accumulators 69.

The hydraulic circuitry further also comprises a pilot operated check valve 76 which assists in isolating the flotation cylinder 60 and the accumulators 69 completely from the reservoir 74 when the valve 72 is in its neutral (central) position. Without this check valve 76, pressure fluid possibly could leak back to the reservoir 74 when the valve 72 is in its shut off position. This would adversely affect the flotation operation.

Flow restrictors 71 are included in both pressure supply lines 75 between the check valve 76 and the coupling of the accumulators 69 to said pressure supply lines 75 to damp the pivotal movement of the header 20 upon actuation of the valve 72 in the one or other direction. These flow restrictors 71 should not affect the interaction between the flotation actuator 60 and the accumulators 69.

When commencing operation, the operator may actuate valve 72 in the one or other direction to position the header 20 in any desired nominal position if this position is not already installed. Should the header 20 subsequently meet a transverse irregularity in the ground during operation of the harvester, then one side of the header will rise and the opposite side will drop to permit the header to move over and clear said irregularity. Assuming this pivotal movement of the header 20 is such as to contract the actuator 60, the fluid thus forced out of the plunger side of the actuator is forced into the corresponding accumulator 69 and increases the pressure therein.

Simultaneously, a partial vacuum is created in the actuator 60 at the plunger rod side thereof to the extent that the gas in the accumulator 69 coupled to this plunger rod side cannot expand further in as much as this gas already occupies the complete volume of said accumulator. During this operation, the valve 72, of course, is in its neutral shut off position, which is why the one accumulator 69 absorbs pressure fluid from below the plunger of the actuator 60 and the other accumulator 69 remains inoperative. When subsequently the irregularity in the ground is cleared by the header 20, the latter will pivot back to its former (nominal) position under the pressure of the accumulator 69 which is coupled to the plunger side of the actuator 60 and which is sufficient to overcome any frictional resistance in the pivotal mounting of the header 20. The gas in this accumulator 69 expands until it fills the accumulator volume completely again and thus, until all pressure fluid, which previously was urged into said accumulator 69 by the irregularity, is urged back to the plunger side of the flotation actuator 60. The vacuum at the plunger rod side of the actuator 60 permits this return movement to occur.

Should the header 20 pivot in the opposite direction, the actuator 60 is extended as the plunger rod 61 thereof is pulled out of the cylinder 65 thereof and a partial vacuum now is created at the plunger side on the one hand while pressure fluid from the plunger rod side of the actuator 60 is urged into the accumulator 69 coupled to said plunger rod side on the other hand. It will be readily appreciated by one skilled in the art that this condition is practically identical to the condition described hereabove and thus that, once the header 20 has cleared the irregularity, the latter again automatically returns to its nominal position by the action of the accumulator 69 coupled to the plunger rod side of the actuator 60. Thus, the header 20 always is returned to the same nominal position as initially set by the operator when the header 20 has cleared any transverse obstruction.

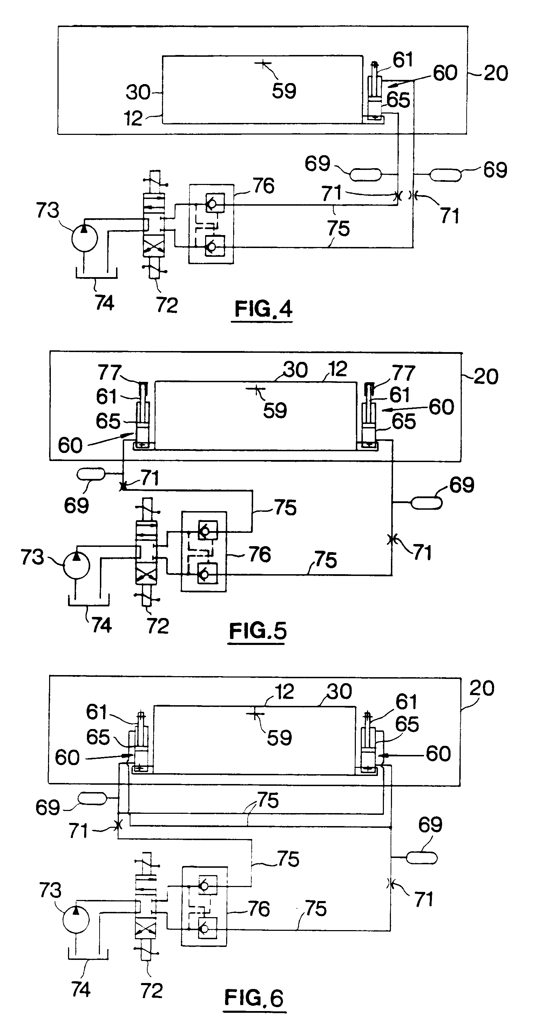

From what precedes, it will be appreciated that the header flotation system including the two hydro-pneumatic accumulators 69, operates independently of the direction of the deviation of the header 20 from its nominal position. In other words, the one or the other accumulator 69 becomes operative, depending on the direction of said deviation, to restore the header 20 to its nominal position as soon as it is permitted to do so by the clearing of any ground irregularity. It further also will be noticed that, with this "two-way" system according to Figure 4, operation of the flotation system does not rely on external forces such as can be obtained from a header imbalance, a spring or a hydraulic coupling to the header suspension mechanism as was the case with the arrangements according to EP-A-0,243,540 from which the present invention starts. Thus, this "two-way" flotation mechanism is more universal in as much as it can be utilized in combination with a balanced header as well as with an unbalanced header.

Turning now to Figure 5, it will be noticed that the only difference between the embodiment shown therein and the embodiment shown in Figure 4 is the replacement of the one double acting actuator 60 according to Figure 4 by a pair of single acting actuators 60 according to Figure 5. One of these actuators 60 is provided at each transversely opposite side of the pivot axis 59 and is connected to a corresponding pressure fluid supply line 75. The operation of this embodiment is very similar to the operation of the embodiment shown in Figure 4 and is such that any temporary pivotal displacement of the header 20 in the one or other direction away from its nominal position as a result of the header 20 encountering an obstruction, causes one hydraulic actuator 60 to retract and the other hydraulic actuator 60 to extend (provided the plunger of this actuator is positively coupled to the header). The retraction of the one actuator 60 results in the gas in the corresponding hydro-pneumatic accumulator 69 to be compressed by the flow of hydraulic fluid out of said one hydraulic actuator to store energy in said accumulator 69. This energy subsequently is released back to said one hydraulic actuator 60 for restoring the header 20 to its nominal position upon the header clearing the obstruction which previously caused the pivotal deviational movement. During this pivotal movement of the header 20 away from its nominal position, the other actuator 60 is extended, as already said. This causes a vacuum to be established therein which however has no effect on the flotational operation of the header 20. When the header 20 subsequently returns to its nominal position, this vacuum merely is eliminated again as is the case in the arrangement according to Figure 4.

When using two single acting hydraulic actuators 60 as shown in Figure 5, it is possible to avoid the creation of a vacuum in the one or other actuator 60 when the flotation system is operational. To accomplish this, it is sufficient to telescopingly couple the plungers 61 of the actuators 60 to the header 20 in a manner to permit the corresponding portions of the header 20 to pivot away from anyone of said plungers 61 without causing a corresponding extension of the actuators 60. This is schematically shown in Figure 5 and is realized by the use of a pair of sleeves 77 which are attached to the header 20 and which each receive the plunger 61 of a corresponding hydraulic actuator 60. When the header 20 is in any nominal position, the plungers 61 of the actuators 60 abut with the bottom of the respective sleeves 77. When the header 20 temporarily is pivoted away from this nominal position in the one or other direction, one sleeve 77 pushes the plunger 61 into the cylinder 65 of the corresponding hydraulic actuator 60 while the other sleeve 77 telescopes relative to its corresponding plunger 61 and away from the corresponding cylinder 65. Thus, as described before, when the header 20 is pivoted in the one or other direction, one actuator 60 is caused to retract, which results in the gas in the corresponding accumulator 69 to be compressed. When subsequently, the gas in this accumulator 69 is permitted to expand again, the plunger 61 of the corresponding actuator 60 is caused to extend which, in turn, causes the header 20 to return to its nominal position. During these pivotal movements of the header 20, the plunger 61 of the other hydraulic actuator 60 is not moved by virtue of the telescopic coupling thereof to the corresponding sleeve 77 and thus, unlike in the arrangement described herebefore, a vacuum is not created in this other hydraulic actuator 60.

Turning now finally to Figure 6, it again will be seen that the arrangement illustrated therein is basically the same as the arrangement according to Figure 5, except for the fact that the single-acting hydraulic actuators 60 of Figure 5 are replaced by double-acting actuators 60. In this embodiment, any one pressure fluid supply line 75 is connected both to the plunger side of one actuator 60 and to the plunger rod side of the other actuator 60. Also, the plungers 61 now are positively coupled to the header 20. Consequently, when the header is caused to pivot in the one or other direction, one actuator 60 is contracted and the other actuator 60 is extended. Pressure fluid, which is urged out of the plunger side of the one actuator 60 which is contracted and out of the plunger rod side of the other actuator 60 which is extended, is urged into the accumulator 69 associated with said sides of the respective actuators 60. Gas in this accumulator 69 thus is compressed to store energy therein. This energy is released back to said opposite sides of said actuators 60 for restoring the header to its nominal position upon the header clearing the obstruction which caused the initial pivotal movement. Thus, the one actuator 60 which previously was contracted, is extended again and the other actuator 60 which previously was extended is retracted again by the release of said energy from said accumulator 69. During this pivotal movement of the header away from and back to its nominal position, a vacuum is established in the pressure fluid supply line 75 associated with the other hydro-pneumatic accumulator 69 to the extent that the gas in this other accumulator 69, under this condition, occupies the entire volume thereof and thus, no hydraulic pressure fluid can be made available from said accumulator 69 to eliminate said vacuum. However, the creation of this vacuum does not noticeably affects the flotation operation of the header 20.

In summary, it thus will be seen that the present invention provides a very simple but highly effective header flotation system which suffers none of the disadvantages of known systems in that both the operating height and orientation can be set without difficulty. This means that the header can still be operated in a weight compensation mode if desired. This also means that, if the header is set to operate at a height above the ground and thus, if there is no permanent contact of the header with the ground, the header nevertheless always returns to the same nominal position previously set by the operator after the header having cleared an obstruction. This would not be the case in prior art arrangements equipped with a hydro-pneumatic accumulator; this accumulator, in these arrangements, not providing enough power to overcome frictional resistance in the pivotal mounting of the header when the deviation from the nominal position is minimal.

Furthermore, the system is very fast acting, whereby peak loads and high torsional forces on the header and/or front end of the machine to which it is fitted, are avoided. This, in turn, results in a structure which is less subject to damages and is carefree. Also, the flotation system is very simple in design as well as in operation and is inexpensive to manufacture.

## Claims

1. A harvester comprising a mobile base unit (12), a transversely extending crop harvesting header (20) mounted on the base unit (12) for pivotal movement between opposed extreme positions about a generally fore-and-aft axis and, a lateral flotation system (57) for, during operation of the harvester, permitting the header (20) to pivot about said axis away from a nominal position intermediate said extreme positions for accommodating transversely offset obstacles encountered by the header (20); said flotation system (57) including hydraulic actuator means (60) of the two-way type and extending between the header (20) and the base unit (12) for pivoting said header (20) in opposite directions, a pressure source (73) coupled to the hydraulic actuator means (60) by a pair of pressure fluid supply lines (75) and, hydro-pneumatic energy storage means comprising a pair of hydro-pneumatic accumulators (69) of which each one is coupled to a corresponding pressure fluid supply line (75) and is pressurized at a pressure greater than the working pressure of the hydraulic actuator means (60); the arrangement being such that, when the header (20) is positioned at said nominal position and meets an offset obstruction:
   - said header (20) is permitted to temporarily pivot in the one or other direction away from this nominal position for moving over said obstruction,
   - this pivotal movement results in the gas in one hydro-pneumatic accumulator (69) being temporarily compressed by the flow of pressure fluid out of the actuator means (60) to store energy,
   - this pressure fluid subsequently is released back to the actuator means (60) to restore the header (20) to its nominal position upon the header (20) clearing the obstruction and,
   - the gas volume in the other hydro-pneumatic accumulator (69) remains unchanged during this pivotal movement away from, and back to said nominal position whereby said other hydro-pneumatic accumulator (69), under this condition, remains inoperative.

2. A harvester according to claim 1, characterized in that, when the header (20) is in its nominal position and meets no obstruction, the gas in the respective hydro-pneumatic accumulators (69) occupies the entire volume thereof.

3. A harvester according to claim 1 or 2, characterized in that the nominal position of the header (20) is selectable from a range of positions inbetween the extreme positions.

4. A harvester according to any one of the preceding claims, characterized in that each hydro-pneumatic accumulator (69) is pressurized at a pressure which exceeds the working pressure in the corresponding pressure fluid supply line (75) with a value of at least 10 bar.

5. A harvester according to any of the preceding claims, characterized in that the lateral flotation system (57) further also comprises a three-position/four-way control valve (72) coupling the pressure source (73) and an associated reservoir (74) to the hydraulic actuator means (60) and the energy storage means (69); said valve (72) being operable:
   - in a first and second position, to connect the pressure source (73) and the associated reservoir (74) to the hydraulic actuator means (60) and the associated energy storage means (60) for positioning the header (20) in any selected nominal position without varying the gas pressure in the energy storage means (69); and
   - in a third position to isolate the hydraulic actuator means (60) and the associated energy storage means (69) from the pressure source (73) and the associated reservoir (74) for maintaining the lateral flotation system (57) in the operative condition.

6. A harvester according to claim 5, characterized in that the lateral flotation system (57) further also comprises a pilot operated check valve (76) positioned between said three-position/four-way control valve (72) on the one hand and the hydraulic actuator means (60) and associated energy storage means (69) on the other hand; said pilot operated check valve (76) assisting in isolating the hydraulic actuator means (60) and the associated energy storage means (69) from the pressure source (73) and the associated reservoir (74) when said control valve (72) is positioned in said third position.

7. A harvester according to claim 5 or 6, characterized in that each pressure fluid supply line (75) comprises a restrictor (71) positioned between the hydro-pneumatic accumulator (69) coupled to said supply line (75) on the one hand and the control valve (72), respectively the pilot operated check valve (76) on the other hand.

8. A harvester according to any of the preceding claims, characterized in that the two-way hydraulic actuator means is in the form of one double-acting hydraulic cylinder (60) coupled between the header (20) and the base unit (12) and with the pair of pressure fluid supply lines (75) connected thereto respectively at the plunger and plunger rod sides thereof; the arrangement being such that temporary pivotal displacement of the header (20) in the one or other direction away from its nominal position as a result of said header (20) meeting an obstruction causes:
   - on the one hand, the gas in one hydro-pneumatic accumulator (69) to be compressed to store energy therein which subsequently is released back to the hydraulic cylinder (60) for restoring the header (20) to its nominal position upon this header (20) clearing the obstruction and,
   - on the other hand, a vacuum to be established in the pressure fluid supply line (75) associated with the other hydro-pneumatic accumulator (69).

9. A harvester according to any of the claims 1 to 7, characterized in that the two-way hydraulic actuator means is in the form of a pair of single-acting hydraulic cylinders (60) coupled between the header (20) and the base unit (12); one cylinder (60) thereof being provided at each transversely opposite side of the generally fore-and-aft extending pivot axis and being connected to a corresponding pressure fluid supply line (75) and the arrangement being such that temporary pivotal displacement of the header (20) in the one or other direction away from its nominal position as a result of said header (20) meeting an obstruction causes:
   - on the one hand, one hydraulic cylinder (60) to retract so that the gas in the corresponding hydro-pneumatic accumulator (69) is compressed by the flow of hydraulic fluid out of said one hydraulic cylinder (60) to store energy in said accumulator (69); said energy subsequently being released back to said one hydraulic cylinder (60) for restoring the header (20) to its nominal position upon this header (20) clearing the obstruction and,
   - on the other hand, the other hydraulic cylinder (60) to extend whereby a vacuum is established therein.

10. A harvester according to any of the claims 1 to 7, characterized in that the two-way hydraulic actuator means is in the form of a pair of single-acting hydraulic cylinders (60) positioned at transversely opposite sides of the generally fore-and-aft extending pivot axis and between the header (20) and base unit

(12); each said cylinder (60) being connected to a corresponding pressure fluid supply line (75) and having a plunger telescopingly coupled to the header (20) in a manner to permit the corresponding portion of the header (20) to pivot away from said plunger without causing a corresponding extension of said cylinder (60) and the arrangement being such that temporary pivotal displacement of the header (20) in the one or other direction away from its nominal position as a result of said header (20) meeting an obstruction causes:

- on the one hand, one cylinder (60) to retract so that the gas in the corresponding hydro-pneumatic accumulator (69) is compressed by the flow of hydraulic fluid out of said one hydraulic cylinder (60) to store energy in said accumulator (69); said energy subsequently being released back to said one hydraulic cylinder (60) for restoring the header (20) to its nominal position upon this header (20) clearing the obstruction and,
- on the other hand, the header to telescopingly move away from the plunger of the other hydraulic cylinder (60) thereby leaving this other cylinder (60) unchanged during said displacement of the header (20) and avoiding the establishment of a vacuum in said other hydraulic cylinder (60).

11. A harvester according to any of the claims 1 to 7, characterized in that:

- the two-way hydraulic actuator means is in the form of a pair of double-acting hydraulic cylinders (60) positioned at transversely opposite sides of the generally fore-and-aft extending pivot axis and coupled between the header (20) and the base unit (12), and
- each pressure fluid supply line (75) is coupled to the plunger side of one hydraulic cylinder (60) and the plunger rod side of the other hydraulic cylinder (60); the arrangement being such that temporary pivotal displacement of the header (20) in the one or other direction away from its nominal position as a result of said header (20) meeting an obstruction causes one hydraulic cylinder (60) to retract and the other hydraulic cylinder (60) to extend so that:
- on the one hand, the gas in one hydro-pneumatic accumulator (69) is compressed by the flow of hydraulic fluid out of the plunger side of the one cylinder (60) which is retracted and of the plunger rod side of the other cylinder (60) which is extended to store energy in said accumulator (69); said energy subsequently being released back to said opposite sides of said cylinders (60) for restoring the header (20) to its nominal position upon this header (20) clearing the obstruction, and,
- on the other hand, a vacuum is established in the pressure fluid supply lines (75) associated with the other hydro-pneumatic accumulator (69).

**Revendications**

1. Moissonneuse comportant une unité de base mobile (12), un bec cueilleur de récolte (20) qui s'étend transversalement, monté sur l'unité de base (12) en vue d'effectuer un mouvement de pivotement entre des positions extrêmes opposées autour d'un axe, dans l'ensemble, longitudinal, et un système de flottement latéral (57) pour, en cours de fonctionnement de la moissonneuse, permettre au bec cueilleur (20) de pivoter autour dudit axe à distance d'une position nominale intermédiaire entre lesdites positions extrêmes, en vue de s'adapter à des obstacles décalés transversalement, rencontrés par le bec cueilleur (20); ledit système de flottement (57) comportant des moyens d'actionnement hydrauliques (60) du type bidirectionnel et s'étendant entre le bec cueilleur (20) et l'unité de base (12) pour faire pivoter ledit bec cueilleur (20) dans des directions opposées, une source de pression (73) accouplée avec les moyens d'actionnement hydrauliques (60) à l'aide de deux lignes d'alimentation en fluide sous pression (75), et des moyens de stockage d'énergie hydropneumatiques comportant deux accumulateurs hydropneumatiques (69) dont chacun est accouplé avec une ligne d'alimentation en fluide sous pression (75) correspondante et mis sous pression à une pression supérieure à la pression de service des moyens d'actionnement hydrauliques (60); le dispositif étant tel que, lorsque le bec cueilleur (20) est positionné au niveau de ladite position nominale et rencontre un obstacle décalé:

- ledit bec cueilleur (20) peut pivoter temporairement dans l'une ou l'autre direction à distance de cette position nominale en vue de passer au-dessus dudit obstacle,
- ce mouvement de pivotement a pour effet que le gaz contenu dans le premier accumulateur hydropneumatique (69) est comprimé temporairement par l'écoulement d'un fluide sous pression hors des moyens d'actionnement (60), en vue de stocker une énergie,

- ce fluide sous pression est ensuite libéré pour revenir aux moyens d'actionnement (60) afin de ramener le bec cueilleur (20) dans sa position nominale, lorsque celui-ci a franchi l'obstacle, et
- le volume de gaz contenu dans le second accumulateur hydropneumatique (69) reste inchangé pendant ce mouvement de pivotement à distance de ladite position nominale et de retour dans celle-ci, ledit second accumulateur hydropneumatique (69) restant, dans ce cas, inactif.

2. Moissonneuse selon la revendication 1, caractérisée en ce que, lorsque le bec cueilleur (20) est dans sa position nominale et ne rencontre aucun obstacle, le gaz contenu dans les accumulateurs hydropneumatiques (69) respectifs occupe la totalité du volume de ceux-ci.

3. Moissonneuse selon la revendication 1 ou 2, caractérisée en ce que la position nominale du bec cueilleur (20) peut être sélectionnée à partir d'une plage de positions intermédiaires entre les positions extrêmes.

4. Moissonneuse selon l'une quelconque des revendications précédentes, caractérisée en ce que chacun des accumulateurs hydropneumatiques (69) est mis sous pression à une pression supérieure à la pression de service régnant dans la ligne d'alimentation en fluide sous pression (75) correspondante, d'une valeur au moins égale à 10 bar.

5. Moissonneuse selon l'une quelconque des revendications précédentes, caractérisée en ce que le système de flottement latéral (57) comporte également une soupape de commande à trois positions/quatre voies (72) reliant la source de pression (73) et un réservoir (74) associé aux moyens d'actionnement hydrauliques (60) et aux moyens de stockage d'énergie (69); ladite soupape (72) étant apte à opérer :
   - dans une première et une seconde position, pour raccorder la source de pression (73) et le réservoir (74) associé aux moyens d'actionnement hydrauliques (60) et aux moyens de stockage d'énergie (69) associés en vue de positionner le bec cueilleur (20) dans n'importe quelle position nominale sélectionnée, sans changer la pression de gaz dans les moyens de stockage d'énergie (69); et
   - dans une troisième position, pour isoler les moyens d'actionnement hydrauliques (60) et les moyens de stockage d'énergie (69) associés vis-à-vis de la source de pression (73) et du réservoir (74) associé en vue de maintenir le système de flottement latéral (57) à l'état actif.

6. Moissonneuse Récolteuse selon la revendication 5, caractérisée en ce que le système de flottement latéral (57) comporte en outre une soupape de retenue à commande pilote (76) interposée entre ladite soupape de commande à trois positions/quatre voies (72), d'une part, et les moyens d'actionnement hydrauliques (60) et les moyens de stockage d'énergie (69) associés, d'autre part; ladite soupape de retenue à commande pilote (76) aidant à isoler les moyens d'actionnement hydrauliques (60) et les moyens de stockage d'énergie (69) associés vis-à-vis de la source de pression (73) et du réservoir (74) associé, lorsque ladite soupape de commande (72) est positionnée dans ladite troisième position.

7. Moissonneuse selon la revendication 5 ou 6, caractérisée en ce que chaque ligne d'alimentation en fluide sous pression (75) comporte un organe limiteur (71) interposé entre l'accumulateur hydropneumatique (69) accouplé avec ladite ligne d'alimentation (75), d'une part, et la soupape de commande (72), respectivement la soupape de retenue à commande pilote (76), d'autre part.

8. Moissonneuse selon l'une quelconque des revendications précédentes, caractérisée en ce que les moyens d'actionnement hydrauliques bidirectionnels se présentent sous la forme d'un vérin hydraulique à double effet (60) unique, monté entre le bec cueilleur (20) et l'unité de base (12), les deux lignes d'alimentation en fluide sous pression (75) étant respectivement raccordées audit vérin hydraulique à double effet, côtés piston et tige de piston de celui-ci; le dispositif étant tel qu'un mouvement de pivotement temporaire du bec cueilleur (20) dans l'une ou l'autre direction à distance de sa position nominale, dû au fait que ledit bec cueilleur (20) rencontre un obstacle, a pour effet:
   - d'une part, de comprimer le gaz contenu dans l'un des accumulateurs hydropneumatiques (69) pour emmagasiner dans celui-ci une énergie qui est ensuite libérée pour revenir dans le vérin hydraulique (60) afin de ramener le bec cueilleur (20) dans sa position nominale, lorsque celui-ci a franchi l'obstacle et,

- d'autre part, d'établir un vide dans la ligne d'alimentation en fluide sous pression (75) associée à l'autre accumulateur hydropneumatique (69).

9. Moissonneuse selon l'une quelconque des revendications 1 à 7, caractérisée en ce que les moyens d'actionnement hydrauliques bidirectionnels se présentent sous la forme de deux vérins hydrauliques à simple effet (60) montés entre le bec cueilleur (20) et l'unité de base (12); l'un de ces vérins (60) étant prévu au niveau de chacun des côtés opposés transversalement de l'axe de pivotement qui s'étend d'une manière générale longitudinalement, en étant raccordé à une ligne d'alimentation en fluide sous pression (75) correspondante, et le dispositif étant tel qu'un mouvement de pivotement temporaire du bec cueilleur (20) dans l'une ou l'autre direction à distance de sa position nominale, dû au fait que ledit bec cueilleur (20) rencontre un obstacle a pour effet :
    - d'une part, de rétracter le premier vérin hydraulique (60), de sorte que le gaz contenu dans l'accumulateur hydropneumatique (69) correspondant est comprimé par l'écoulement d'un fluide hydraulique hors dudit premier vérin hydraulique (60) pour accumuler une énergie dans ledit accumulateur (69); ladite énergie étant ensuite libérée pour revenir dans ledit premier vérin hydraulique (60) afin de ramener le bec cueilleur (20) dans sa position nominale, lorsque celui-ci a franchi l'obstacle, et
    - d'autre part, d'étirer le second vérin hydraulique (60), pour ainsi établir un vide à l'intérieur de celui-ci.

10. Moissonneuse selon l'une quelconque des revendications 1 à 7, caractérisée en ce que les moyens d'actionnement hydrauliques bidirectionnels se présentent sous la forme de deux vérins hydrauliques à simple effet (60) positionnés au niveau de côtés opposés transversalement de l'axe de pivotement qui s'étend d'une manière générale longitudinalement, et entre le bec cueilleur (20) et l'unité de base (12); chacun desdits vérins (60) étant raccordé à une ligne d'alimentation en fluide sous pression (75) correspondante et comportant un piston accouplé télescopiquement avec le bec cueilleur (20) de façon que la partie correspondante du bec cueilleur (20) puisse pivoter à distance dudit piston sans provoquer une extension correspondante dudit vérin (60), et le dispositif étant tel qu'un mouvement de pivotement temporaire du bec cueilleur (20) dans l'une ou l'autre direction à distance de sa position nominale, dû au fait que ledit bec cueilleur (20) rencontre un obstacle a pour effet :
    - d'une part, de rétracter le premier vérin (60), de sorte que le gaz contenu dans l'accumulateur hydropneumatique (69) correspondant est comprimé par l'écoulement d'un fluide hydraulique hors dudit premier vérin hydraulique (60) pour emmagasiner une énergie dans ledit accumulateur (69); ladite énergie étant ensuite libérée pour revenir dans ledit premier vérin hydraulique (60) afin de ramener le bec cueilleur (20) dans sa position nominale, lorsque celui-ci a franchi l'obstacle et,
    - d'autre part, de déplacer le bec cueilleur télescopiquement à distance du piston du second vérin hydraulique (60) pour ainsi laisser ce second vérin (60) inchangé pendant ledit mouvement du bec cueilleur (2) et éviter l'établissement d'un vide dans ledit second vérin hydraulique (60).

11. Moissonneuse selon l'une quelconque des revendications 1 à 7, caractérisée en ce que :
    - les moyens d'actionnement hydrauliques bidirectionnels se présentent sous la forme de deux vérins hydrauliques à double effet (60) positionnés au niveau de côtés opposés transversalement de l'axe de pivotement qui s'étend d'une manière générale longitudinalement, et montés entre le bec cueilleur (20) et l'unité de base (12), et
    - chaque ligne d'alimentation en fluide sous pression (75) est raccordée côté piston du premier vérin hydraulique (60) et côté tige de piston du second vérin hydraulique (60); le dispositif étant tel qu'un mouvement de pivotement temporaire du bec cueilleur (20) dans l'une ou l'autre direction à distance de sa position nominale, dû au fait que ledit bec cueilleur (20) rencontre un obstacle, a pour effet de rétracter le premier vérin hydraulique (60) et d'étirer le second vérin hydraulique (60), de sorte que :
    - d'une part, le gaz contenu dans l'un des accumulateurs hydropneumatiques (69) est comprimé par l'écoulement d'un fluide hydraulique hors du côté piston du premier vérin (60) qui est rétracté, et hors du côté tige de piston du second vérin (60) qui est étiré, pour emmagasiner une énergie dans ledit accumulateur (69); ladite énergie étant ensuite libérée pour revenir auxdits côtés opposés desdits vérins (60) afin de ramener le bec cueilleur (20) dans sa position nominale, lorsque celui-ci a franchi l'obstacle, et,

- d'autre part, un vide est établi dans les lignes d'alimentation en fluide sous pression (75) associées à l'autre accumulateur hydropneumatique (69).

**Patentansprüche**

1. Erntemaschine mit einer fahrbaren Grundeinheit (12), einem sich in Querrichtung erstreckenden Erntevorsatz (20), der an der Grundeinheit (12) für eine Schwenkbewegung zwischen entgegengesetzten Endstellungen um eine allgemein in Längsrichtung verlaufende Achse befestigt ist, und mit einem Querschwingungssystem (57), um es im Betrieb der Erntemaschine dem Erntevorsatz (20) zu ermöglichen, um die genannte Achse ausgehend von einer zwischen den Endstellungen liegenden Nennposition aus zu verschwenken, um sich an in Querrichtung versetzte Hindernisse anzupassen, auf die der Erntevorsatz (20) auftrifft, wobei das Querschwingungssystem (57) eine Hydraulik-Betätigungseinrichtung (60) vom Zweiweg-Typ, die sich zwischen dem Erntevorsatz (20) und der Grundeinheit (12) erstreckt, um den Erntevorsatz (20) in entgegengesetzten Richtungen zu verschwenken, eine Druckmittelquelle (73), die mit der Hydraulik-Betätigungseinrichtung (60) über zwei Druckströmungsmittel-Versorgungsleitungen (75) gekoppelt ist, und hydro-pneumatische Energiespeichereinrichtungen einschließt, die zwei hydro-pneumatische Akkumulatoren (69) umfassen, von denen jeweils einer mit einer entsprechenden Druckströmungsmittel-Versorgungsleitung (75) verbunden und mit einem Druck beaufschlagt ist, der größer als der Arbeitsdruck der Hydraulik-Betätigungseinrichtung (60) ist, und wobei die Anordnung derart ist, daß, wenn sich der Erntevorsatz (20) in der Nennstellung befindet und auf ein versetztes Hindernis auftrifft:

    - der Erntevorsatz (20) vorübergehend in der einen oder anderen Richtung von seiner Nennstellung fort verschwenken kann, um sich über das Hindernis zu bewegen,
    - diese Schwenkbewegung dazu führt, daß das Gas in einem hydro-pneumatischen Akkumulator (69) vorübergehend durch die Strömung des Druckströmungsmittels aus der Betätigungseinrichtung (60) komprimiert wird, um Energie zu speichern,
    - dieses Druckströmungsmittel nachfolgend zurück an die Betätigungseinrichtung (60) abgegeben wird, um den Erntevorsatz (20) auf seine Nennstellung zurückzuführen, nachdem der Erntevorsatz das Hindernis passiert hat, und
    - das Gasvolumen des anderen hydropneumatischen Akkumulators (69) während dieser Schwenkbewegung von der Nennstellung fort und auf diese zurück unverändert bleibt, so daß der andere hydro-pneumatische Akkumulator (69) in diesem Zustand unwirksam bleibt.

2. Erntemaschine nach Anspruch 1, dadurch **gekennzeichnet,** daß wenn sich der Erntevorsatz (20) in seiner Nennstellung befindet und auf kein Hindernis auftrifft, das Gas in den jeweiligen hydro-pneumatischen Akkumulatoren (69) deren Gesamtvolumen einnimmt.

3. Erntemaschine nach Anspruch 1 oder 2, dadurch **gekennzeichnet,** daß die Nennstellung des Erntevorsatzes (20) aus einem Bereich von Positionen zwischen den Endstellungen auswählbar ist.

4. Erntemaschine nach einem der vorhergehenden Ansprüche, dadurch **gekennzeichnet,** daß jeder hydropneumatische Akkumulator (69) mit einem Druck beaufschlagt ist, der den Arbeitsdruck in der entsprechenden Druckströmungsmittel-Versorgungsleitung (75) um einen Wert von zumindestens 10 bar übersteigt.

5. Erntemaschine nach einem der vorhergehenden Ansprüche, dadurch **gekennzeichnet,** daß das Querschwingungssystem (57) weiterhin ein Dreistellungs-/Vierweg-Steuerventil (72) umfasst, die die Druckmittelquelle (73) und einen zugehörigen Behälter (74) mit der Hydraulik-Betätigungseinrichtung (60) und den Energiespeichereinrichtungen (69) koppelt, wobei das Ventil wie folgt einstellbar ist:

    - auf eine erste und zweite Stellung zur Verbindung der Druckmittelquelle (73) und des zugehörigen Behälters (74) mit der Hydraulik-Betätigungseinrichtung (60) und den zugehörigen Energiespeichereinrichtungen (69) zur Einstellung des Erntevorsatzes (20) auf eine ausgewählte Nennstellung ohne Änderung des Gasdruckes in den Energiespeichereinrichtungen (69), und

- auf eine dritte Stellung zur Trennung der Hydraulik-Betätigungseinrichtung (60) und der zugehörigen Energiespeichereinrichtungen (69) von der Druckmittelquelle (73) und dem zugehörigen Behälter (74), um das Querschwingungssystem (57) in der Betriebsstellung zu halten.

6. Erntemaschine nach Anspruch 5, dadurch **gekennzeichnet,** daß das Querschwingungssystem (57) weiterhin ein vorgesteuertes Rückschlagventil (76) umfaßt, das zwischen dem Dreistellungs-/Vierweg-Steuerventil (72) einerseits und der Hydraulik-Betätigungseinrichtung (60) und den zugehörigen Energiespeichereinrichtungen (69) andererseits angeordnet ist, und das die Trennung der Hydraulik-Betätigungseinrichtung (60) und der zugehörigen Energiespeichereinrichtungen (69) von der Druckmittelquelle (73) und dem zugehörigen Behälter (74) unterstützt, wenn das Steuerventil (72) auf die genannte dritte Stellung eingestellt ist.

7. Erntemaschine nach Anspruch 5 oder 6, dadurch **gekennzeichnet,** daß jede Druckströmungsmittel-Versorgungsleitung (75) eine Drossel (71) umfaßt, die zwischen dem mit der Versorgungsleitung (75) gekoppelten hydropneumatischen Akkumulator (69) einerseits und dem Steuerventil (72) bzw. dem vorgesteuerten Rückschlagventil (76) andererseits angeordnet ist.

8. Erntemaschine nach einem der vorhergehenden Ansprüche, dadurch **gekennzeichnet,** daß die hydraulische Zweiweg-Betätigungseinrichtung die Form eines doppelwirkenden Hydraulikzylinders (60) aufweist, der zwischen dem Erntevorsatz (20) und der Grundeinheit (12) eingekoppelt ist, wobei die beiden Strömungsmitteldruck-Versorgungsleitungen (75) jeweils mit der Kolbenseite bzw. der Kolbenstangenseite verbunden sind und die Anordnung derart ist, daß eine vorübergebende Schwenkbewegung des Erntevorsatzes (20) in der einen oder anderen Richtung von der Nennstellung fort als Ergebnis des Auftreffens des Erntevorsatzes (20) auf ein Hindernis folgendes bewirkt:
  - einerseits wird das Gas in einem hydropneumatischen Akkumulator (69) komprimiert, um Energie darin zu speichern, die nachfolgend an den Hydraulikzylinder (60) zurück abgegeben wird, um den Erntevorsatz (20) auf seine Nennstellung zurückzustellen, nachdem dieser Erntevorsatz (20) das Hindernis passiert hat und
  - andererseits wird ein Vakuum in der Strömungsmitteldruck-Versorgungsleitung (75) ausgebildet, die dem anderen hydro-pneumatischen Akkumulator (69) zugeordnet ist.

9. Erntemaschine nach einem der Ansprüche 1 - 7, dadurch **gekennzeichnet,** daß die hydraulische Zweiweg-Betätigungseinrichtung die Form von zwei einzelwirkenden Hydraulikzylindern (60) aufweist, die zwischen dem Erntevorsatz (20) und der Grundeinheit (12) eingekoppelt sind, wobei ein Zylinder (60) an jeder der in Querrichtung entgegengesetzten Seiten der sich allgemein in Längsrichtung erstreckenden Schwenkachse angeordnet und mit einer entsprechenden Druckströmungsmittel-Versorgungsleitung (75) verbunden ist, und wobei die Anordnung derart ist, daß eine vorübergehende Schwenkbewegung des Erntevorsatzes (20) in der einen oder anderen Richtung von der Nennstellung fort als Ergebnis des Auftreffens des Erntevorsatzes (20) auf ein Hindernis folgendes bewirkt:
  - einerseits ein Zurückziehen eines Hydraulikzylinders (60), so daß das Gas in dem entsprechenden hydro-pneumatischen Akkumulator (69) durch die Strömung des Hydraulikströmungsmittels aus dem einen Hydraulikzylinder (60) heraus komprimiert wird, um Energie in dem Akkumulator (69) zu speichern, wobei die Energie nachfolgend wieder zurück an den einen Hydraulikzylinder (60) abgegeben wird, um den Erntevorsatz auf seine Nennstellung zurückzustellen, wenn dieser Erntevorsatz (20) das Hindernis passiert hat, und
  - andererseits ein Ausfahren des anderen Hydraulikzylinders (60), wodurch in diesem ein Vakuum ausgebildet wird.

10. Erntemaschine nach einem der Ansprüche 1 - 7, dadurch **gekennzeichnet,** daß die hydraulische Zweiweg-Betätigungseinrichtung die Form von zwei einzelwirkenden Hydraulikzylindern (60) aufweist, die auf in Querrichtung entgegengesetzten Seiten der sich allgemein in Längsrichtung erstreckenden Schwenkachse und zwischen dem Erntevorsatz (20) und der Grundeinheit (12) angeordnet sind, wobei jeder Zylinder (60) mit einer entsprechenden Druckströmungsmittel-Versorgungsleitung (75) verbunden ist und einen teleskopartig mit dem Erntevorsatz (20) gekoppelten Kolben derart aufweist, daß der entsprechende Abschnitt des Erntevorsatzes (20) von dem Kolben fort verschwenken kann, ohne eine entsprechende Ausfahrbewegung des Zylinders (60) hervorzurufen, und wobei die Anordnung derart ist, daß eine vorübergehende Schwenkbewegung des Erntevorsatzes (20) in der einen oder anderen Richtung von seiner Nennstellung fort als Ergebnis des Auftreffens dieses Erntevorsatzes (20) auf ein Hindernis folgendes bewirkt:

- einerseits das Einziehen eines Zylinders (60) derart, daß das Gas in dem entsprechenden hydro-pneumatischen Akkumulator (69) durch die Strömung des Hydraulikströmungsmittels aus dem einen Hydraulikzylinder (60) heraus komprimiert wird, um Energie in dem Akkumulator (69) zu speichern, wobei diese Energie nachfolgend wieder zurück an den einen Hydraulikzylinder (60) abgegeben wird, um den Erntevorsatz (20) auf seine Nennstellung zurückzustellen, nachdem dieser Erntevorsatz (20) das Hindernis passiert hat, und
- andererseits eine teleskopartige Fortbewegung des Erntevorsatz von dem Kolben des anderen Hydraulikzylinders (60) fort, wodurch dieser andere Zylinder (60) während dieser Bewegung des Erntevorsatzes (20) unverändert bleibt und die Ausbildung eines Vakuums in dem anderen Hydraulikzylinder (60) vermieden wird.

11. Erntemaschine nach einem der Ansprüche 1 - 7,
dadurch **gekennzeichnet, daß**:
- die hydraulische Zweiweg-Betätigungseinrichtung die Form von zwei doppelwirkenden Hydraulikzylindern (60) aufweist, die an in Querrichtung entgegengesetzten Seiten der sich allgemein in Längsrichtung erstreckenden Schwenkachse angeordnet und zwischen dem Erntevorsatz (20) und der Grundeinheit (12) eingekoppelt sind, und
- jede Druckströmungsmittel-Versorgungsleitung (75) mit der Kolbenseite eines Hydraulikzylinders (60) und der Kolbenstangenseite des anderen Hydraulikzylinders (60) verbunden ist, wobei die Anordnung derart ist, daß eine vorübergehende Schwenkbewegung des Erntevorsatzes in der einen oder anderen Richtung von seiner Nennstellung fort als Ergebnis des Auftreffens des Erntevorsatzes (20) auf ein Hindernis bewirkt, daß ein Hydraulikzylinder (60) eingezogen und der andere Hydraulikzylinder (60) ausgefahren wird, so daß:
- einerseits das Gas in einem hydro-pneumatischen Akkumulator (69) durch die Strömung des Hydraulikströmungsmittels aus der Kolbenseite des einen Zylinders, der eingezogen wird, und der Kolbenstangenseite des anderen Zylinders (60), der ausgefahren wird, heraus komprimiert wird, um Energie in dem Akkumulator (69) zu speichern, wobei diese Energie nachfolgend an die entgegengesetzten Seiten der Zylinder (60) zurück abgegeben wird, um den Erntevorsatz (20) auf seine Nennstellung zurückzustellen, nachdem dieser Erntevorsatz (20) das Hindernis passiert hat, und
- andererseits ein Vakuum in den Druckströmungsmittel-Versorgungsleitungen (75) ausgebildet wird, die mit dem anderen hydro-pneumatischen Akkumulator (69) verbunden sind.

FIG.1

FIG.2

FIG.3

**FIG.4**

**FIG.5**

**FIG.6**

17